# EUROPEAN PATENT APPLICATION

(11) **EP 1 227 407 A2**
(43) Date of publication of application: **31.07.2002**
(21) Application number: 02250333.8
(22) Date of filing: 18.01.2002
(51) Int. Cl.: G06F 17/24

(54) **User interface for creating printing templates**

(30) Priority: 24.01.2001 JP 2001016297
(71) Applicant: SEIKO INSTRUMENTS INC., Chiba-shi, Chiba 261 (JP)
(72) Inventor: Nagasawa, Jun, Mihama-ku, Chiba-shi, Chiba (JP)
(74) Representative: Kenyon, Sarah Elizabeth

(57) **Abstract**

A user interface for creating a printing template of the present invention comprises a paper stage showing a printing paper and an item list displaying a list of items possible to be arranged on the paper stage, as well as having a function of grouping a plurality of items selected from the item list and a function of group editing such as performing character position alignment of the contents in the grouped items.

## Description

The present invention relates to a user interface for creating a printing template, and more particularly relates to a user interface for creating a printing template for printing out analysis results in a report form of a desired style.

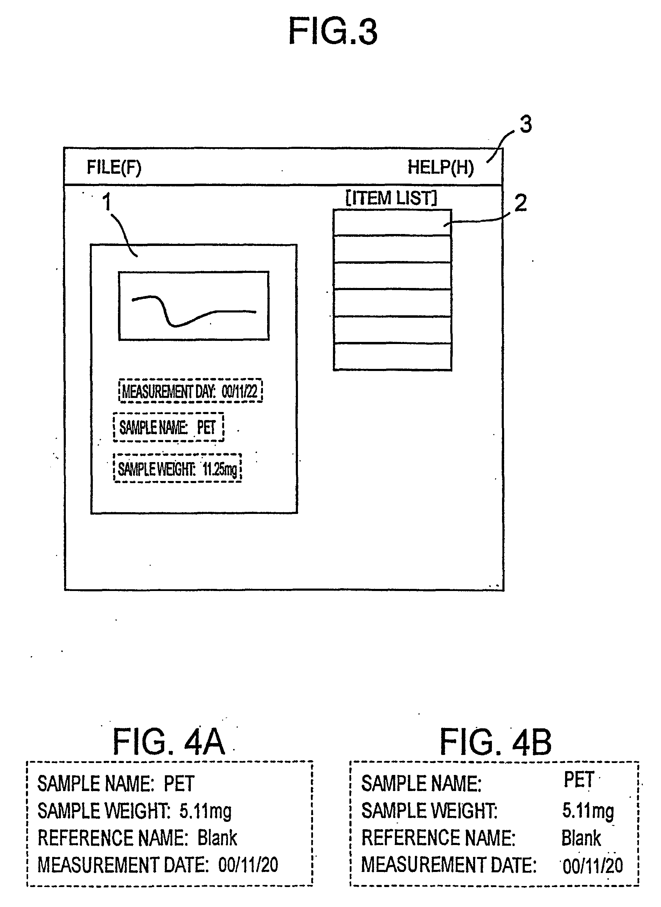

Recently, an analyzer is not only for simply detecting and measuring conditions of a sample under a specified environment and recording and displaying the detected value, but also an integrated system enabling continuous operations from drive control by operating a computer such as a personal computer connected to a detection unit, various data processing performed by reading the detected values, display of the data in the form of a graph and a table on a display screen as well as analysis of the data, to finally analysis results produced in a report form. Auser interface for creating a printing template is already provided in order to print out analysis results in a report form of a specified style, and a main window of this kind of user interface for creating a printing template of the related art has a configuration shown in FIG.3.No.1 in FIG.3 is a paper stage showing a printing paper, and an image displayed on this stage is printed out from a printer.No.2 in FIG.3 is an item list showing items possible to arrange on the paper stage, and No.3 is a menu bar. Types of items that can be arranged on the paper stage are a graph of measured data and a measurement parameter used for descriptive matters and measurement. The number of graphs varies from one to a plurality of graphs depending on the type of analyzer. The kind and number of measurement parameters depend on the analyzer. An analyzer usually has a number of measurement parameters, and the number of items displayed on the item list becomes considerably large. When measurement parameters are displayed on the paper stage, the parameters are displayed in the form of a title and its content, for example, "sample weight: 5.11mg".

The procedures to create a printing template using this user interface will be described.
(1) First, an operator decides the insertion point by clicking a position on the paper stage where an item should be inserted using a mouse. In general, this assigned position becomes the left shoulder position of the item range.
(2) Next, the operator selects the item list menu from the menu bar, and clicks an item to be inserted from the displayed item list. Then, the selected item is inserted and displayed in a rectangular area having the insertion point as a left shoulder position of the paper stage.
(3) When the operator wishes to change display attributes (such as size, color, font) of inserted items, the operator first clicks to select the item displayed on the paper stage, then selects the property menu from the menu bar. Arbitrary display attributes can be changed by selecting and assigning them in the property window.

By repeating the above operation for each item, a printing template having an arbitrary style can be created.

Incidentally, many users of analyzers tend to be very particular about the readability and attractiveness of printed results; Researchers have a tendency to pay close attention to small details. When items are displayed in a vertical arrangement, the starting positions of the contents are not aligned and are not easy to see due to the difference of the number of title characters in each item as shown in FIG.4 A. There have been some requests that the starting positions of the contents to be perfectly aligned to display as shown in FIG.4 B.

A user Interface for creating printing templates of the related art comprises a structure of having each item independently arranged on the paper stage without any relationship. Therefore, when the contents of items arranged vertically are to be aligned, this processing cannot be automatically performed, and the editing operation of spacing is performed by selecting each target item and inserting appropriate spaces between the titles and the contents, thus it is a time consuming process.

The feature of the present invention is to provide a user interface for creating printing templates that have a group editing function for a group of items. For example, when dealing with multiple display items on a paper stage, the positions of content characters are automatically aligned regardless of the difference of the number of title characters located in front of the contents.

A user interface for creating printing templates with the present invention comprises a paper stage showing a printing paper and an item list displaying a list of items possible to be arranged on the paper stage, as well as having the function of grouping multiple items selected from the item list and a function of group editing such as performing character position alignment of the contents in the grouped items.

Embodiments of the present invention will now be described by way of further example only and with reference to the accompanying drawings, in which:-
FIG. 1 is a view showing a main window screen of a user interface for creating a printing template of the present invention.
FIG. 2 is a flowchart of a user interface for creating a printing template of the present invention.
FIG. 3 is a view showing a main window screen of a user interface for creating a printing template of the related art.
FIG. 4 is a view showing styles of item columns, and A shows an example of non-aligned character positions of contents, B shows an example-of aligned character positions.

A user interface for creating printing templates of the present invention, the same as the related art shown in the FIG. 3, comprises a function displaying on the display a paper stage showing a printing paper and an item list displaying a list of items possible to be arranged on the paper stage, as well as having a function of grouping a plurality of items selected from the item list and a function of performing group editing such as character position alignment of the contents in the grouped items. The operation of the present invention and the performed action based on the operation are as follows.
An operator clicks to select an item such as a parameter that should be described in a report from an item list using a mouse, drags to move the item to the desired insertion position on the paper stage while depressing the mouse button, and releases the mouse button at the insertion position to drop the item. By this operation, the dropped item is inserted and displayed at the position. When the dropped position overlaps with the existing item, in the present invention, since a computer recognizes that the existing item and the new item are handled in a same way, information of these items is grouped together and the new item is attached below the existing item so as to be vertically arranged to display. At this time, spacing is performedby inserting spaces between titles and contents in order to align character positions of contents in the group, and the character positions of contents are perfectly aligned to display. This character position alignment is provided with an automatic editing function for operating alignment of first positions of characters in case of general characters and alignment of digits in case of numeric values. In addition, display attributes such as character size, font, and color, are structured to be applied at the same time within a group.

Furthermore, the positional movement of a plurality of grouped items is integrally processed in the present invention, and when a position within the group range is clicked and dragged to move, the whole group is designed to move on one table on the screen.

As described above, the present invention is a user interface for writing a plurality of display items such as parameters, displayed together with a graph on a paper stage of an analyzer having a report creation function, in a desired style at a desired position on a paper. By having a group editing function capable of grouping a plurality of the display items such as parameters, an analyzer having a function for effectively producing an attractive report so that positions of the content characters are automatically aligned regardless of the difference of the number of the title characters located in front of the contents, is provided. The technology used for a user interface relating to the present invention is not limited to an analyzer, but can be widely generally applied for any table creation operations for a computer.

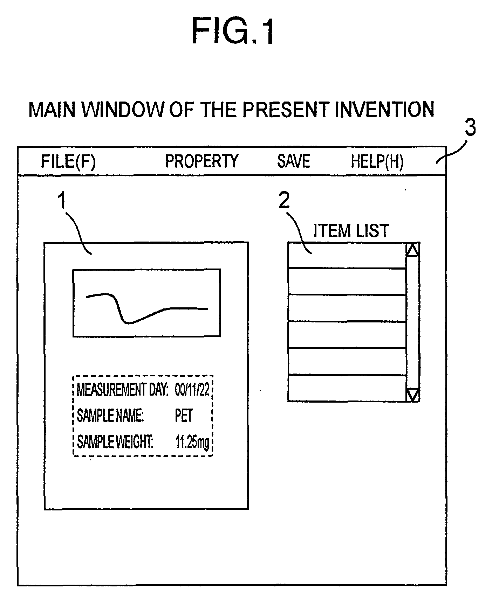

The specific operation will be described by showing an example of an analyzer to which the present invention is applied.FIG.1 is a view showing an example of a main window of a user interface for creating printing template of the present invention.No.1 in FIG.1 is a paper stage showing a printing paper of the main window.No.2 in FIG.1 is an item list having items possible to arrange on the paper stage of the main window, and No.3 is a menu bar. When an operator directs to print, the same appearance of the screen displayed on this paper stage will be printed and output on a paper.

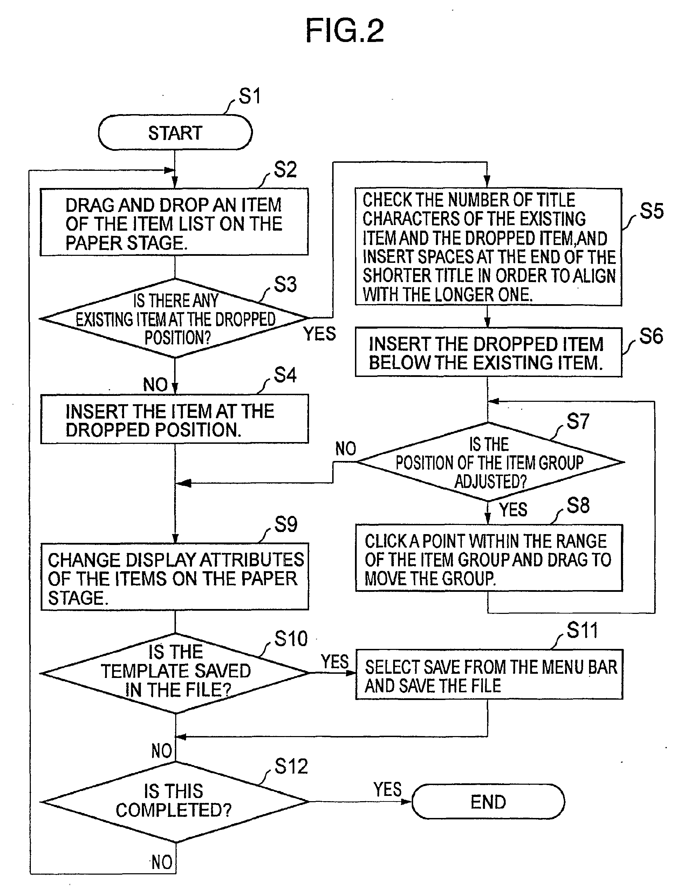

Next, the operation of the user interface of the present invention will be described using the flowchart shown in FIG.2.
(Step 1) The user interface is activated by an operation instruction from an operator, and the main window shown in FIG.1 is displayed on the display.
(Step 2) The operator selects a necessary item from items on the item list, presses a mouse button, drags the item to a desired position on the paper stage while depressing the mouse button, releases the mouse button on the paper stage, and drops the item.
(Step 3) A judgment as to whether an existing item is already at the dropped position will be made.
(Step 4) If no item existed at the dropped position, the contents of the dropped item will be inserted in the assigned desired position on the paper stage.
(Step 5) If the dropped position overlaps with the existing item, the dropped item and the existing item will be recognized as the one within the same group and will be edited in such a way that the top positions of characters are aligned, by checking the number of title characters of the both items and by inserting spaces after the shorter title so that the number of the shorter title characters will be the same as the longer title characters.
(Step 6) Next, when a new line character is inserted after the contents of the existing item, the first position of the title characters of the dropped item is joined together to be re-drawn on the display.

In this way, the existing item and the dropped item are displayed in a vertical arrangement, and first positions of each title and content characters are aligned in the same position. Also, when a new item is dropped onto the position having two or more existing items, the operations of the above step 5 and step 6 are performed for all these items. At this time, since the dropped item is edited to attach to the bottom line of the group, items are displayed in dropping order.
(Step 7) The operator judges whether it is necessary to adjust positions of the displayed grouped items and proceeds to the next step if no adjustment is needed.
(Step 8) If adjustment is needed, the operator clicks and drags a point within the range of the displayed grouped items so that the grouped items are moved together, then, returns to step 7. (Step 9) When display attributes of the items displayed on the paper stage are to be changed, it is necessary to open the property window by clicking to select an item on the paper stage and by selecting the property menu from the menu bar. Size, color, and font can be changed by redirecting the display attributes on this property window.

By repeating the processes from the step 2 to the step 9, a printing template with arbitrary display attributes can be created on the paper stage.
(Step 10) When a desired printing template is created, the operator determines whether this is necessary to save it and proceeds to the next step if it is not necessary.
(Step 11) If this has to be saved, the operator selects the save menu from the menu bar to open the save window. The createdprinting template is saved, for example, in the hard disk by assigning the directory and entering a file name on this save window.

When all operations are completed, the printing editing operation of the user interface of the present invention is completed by selecting the terminate menu from the menu bar.

A user interface for creating printing templates, having an area for displaying a printing image and an area for displaying printing items in a list, to be displayed on the display, comprises a function for clicking and dragging a necessary item on the screen, and dropping the item on a desired position within the area that the printing image is displayed so as to be inserted into the printing image, a function for attaching the dropped item to the end of an existing item as well as recognizing the both items as the same information in one group in case that the existing item is already at the same position as the dropped item, and a function for performing group, editing on information of the same group, therefore, editing a printing image to be readable and attractive can be performed easily and quickly.

Since the group editing can be performed for character position alignment such as position alignment of first characters or digit alignment of numeric values, display attributes such as size, color, and font, and position adjustment of grouped items, it is no longer necessary to manually edit titles of every item one by one as in the related art.

In addition, grouping of items can be performed by a simple operation in that a new item is dragged and dropped on the existing item.

The aforegoing description has been given by way of example only and it will be appreciated by a person skilled in the art that modifications can be made without departing from the scope of the present invention.

## Claims

1. A user interface for creating a printing template, having an area for displaying a printing image and an area for displaying printing items in a list, on the display, comprising:
means for clicking and dragging a necessary item on the screen, and dropping the item to a desired position within the area where the printing image is displayed so as to be inserted into the printing image,
means for attaching the dropped item to the end of an existing item as well as recognizing both items as information belonging to the same group in case that the existing item is already at the same position as the dropped item, and
means for performing group editing on information of the same group.

2. The user interface for creating a printing template of claim 1, wherein the group editing includes a character position alignment such as alignment of the first characters, or digit alignment of numeric values.

3. The user interface for creating a printing template of claim 1, wherein the group editing includes display attributes such as size, color, and font.

4. The user interface for creating a printing template of claim 1, wherein the group editing includes position adjustment of grouped items.

5. The user interface for creating a printing template as claimed in any one of claims 1 to 4, wherein the printing image is the report of the analysis results, and the listed display items include the title and its contents of analysis conditions such as parameters.

6. The user interface for creating a printing template as claimed in claim 5, wherein the character position alignment for group editing includes the positions of the first characters of the contents of the printing items.
